# FASCICULE DE BREVET EUROPEEN

(11) **EP 1 495 918 B1**
(45) Date de publication et mention de la délivrance du brevet: **09.08.2006**
(21) Numéro de dépôt: 04291467.1
(22) Date de dépôt: 11.06.2004
(51) Int. Cl.: B60R 19/20

(54) **Dispositif d'amortissement du déplacement d'une pièce d'un véhicule impliquant un fil métallique**
Stossabsorbierende Vorrichtung eines Fahrzeugteils mit einem Metallfaden
damping device for the displacement of a part of a vehicle including a metallic yarn

(30) Priorité: 10.07.2003 FR 0308477
(43) Date de publication de la demande: 12.01.2005
(73) Titulaire: SNPE Matériaux Energétiques, 75004 Paris (FR)
(72) Inventeur: Borg, Evrard, 83110 Sanary (FR); d'Emmanuelle, Laurent, 83200 Toulon (FR); Laspesa, Eric, 83140 Six-Fours (FR); Nadeau, Jean-Paul, 83190 Ollioules (FR)
(74) Mandataire: Le Roux, Martine

(56) Documents cités:
- EP-A- 0 550 321
- EP-A- 0 894 677
- FR-A- 2 805 323
- GB-A- 2 379 194

## Description

Le domaine technique de l'invention est celui de la sécurité automobile et plus spécialement celui des systèmes de sécurité mis en oeuvre dans des véhicules automobiles pour amortir le déplacement de certaines pièces qui ont été mises en mouvement lors d'un choc mécanique du véhicule automobile avec un élément extérieur. En effet, lors d'un impact, certaines pièces d'un véhicule automobile peuvent constituer une butée fixe pour un occupant d'un véhicule automobile ou un piéton et être ainsi susceptible de blesser cet occupant ou ce piéton.

Le système d'absorption selon l'invention pourra donc être utilisé par exemple pour amortir un bouclier d'un véhicule automobile en cas de choc frontal du véhicule à basse vitesse, pour amortir les membres inférieurs d'un occupant d'un véhicule automobile, pour amortir le mouvement d'un capot d'un véhicule créé par l'impact d'un piéton contre ledit capot, pour limiter de manière modulable, lors d'un impact, l'effort exercé par un occupant d'un véhicule automobile sur sa ceinture de sécurité ou pour amortir l'impact d'un conducteur contre une colonne de direction.

Les dispositifs d'absorption d'énergie ont déjà fait l'objet de plusieurs demandes de brevet.

On peut citer par exemple la demande de brevet EP 0550 321 qui concerne un vérin pyrotechnique à course amortie pouvant être utilisé dans tout type de système d'absorption d'énergie. Ce vérin comporte un générateur de gaz pyrotechnique, un piston, une chambre de combustion de matières pyrotechniques et une chambre de contre-pression ainsi qu'une chambre intermédiaire comprise entre ladite chambre de combustion et une extrémité du piston. Un canal relie la chambre intermédiaire à la chambre de contre-pression. Les gaz émis par le générateur mettent sous pression la chambre intermédiaire pour s'opposer au mouvement du piston et ainsi amortir sa course, une partie desdits gaz étant acheminée par le canal vers la chambre de contre-pression.

Dans des systèmes d'absorption utilisant un vérin à course amortie tel que décrit ci-dessus, l'amortissement est obtenu directement et uniquement grâce aux gaz de combustion. Pour obtenir une réponse parfaitement adaptée à l'impact qui s'est produit, il sera donc nécessaire d'utiliser un générateur pyrotechnique de gaz modulable. Ceci complique grandement la structure d'un tel système d'absorption et augmente également son coût de fabrication. De plus l'implantation d'un tel système nécessitera souvent une adaptation des pièces sur lesquelles il est implanté.

Un dispositif d'amortissement selon le préambule de la revendication 1 est connu par GB-2 379 194-A.

Le but de l'invention est donc d'obtenir un dispositif d'amortissement simple, facile à mettre en oeuvre et à implanter et ne faisant intervenir qu'un nombre restreint de pièces, ce qui permettra notamment de lui conférer une grande fiabilité de fonctionnement.

Ce but est atteint par un dispositif d'amortissement du déplacement d'au moins une pièce mise en mouvement lors d'un choc mécanique d'un véhicule automobile avec un élément extérieur, le dispositif comprenant un actionneur pyrotechnique apte à déplacer un piston et étant caractérisé en ce qu'il inclut un fil dont une extrémité est reliée à une partie fixe du véhicule, ledit actionneur, qui est solidaire de la pièce à amortir, coopérant avec ledit fil pour freiner puis stopper ladite pièce.

Selon l'invention, ladite pièce pourra être constituée par exemple d'un bouclier d'un véhicule automobile, d'une ceinture de sécurité, du capot d'un véhicule automobile ou d'une colonne de direction d'un véhicule automobile contre laquelle le conducteur vient s'appuyer lors du choc.

La notion d'amortissement de la pièce est assimilable à un freinage puis à un arrêt de ladite pièce. Cet amortissement est réalisé au moyen d'une interaction entre les deux éléments que sont le fil et l'actionneur, apparaissant comme indissociables l'un de l'autre pour remplir cette fonction.

Avantageusement le fil possède une extrémité libre et présente une aptitude à la déformation.

De cette manière, le fil possède une extrémité libre et une extrémité reliée à une partie fixe du véhicule.

De façon préférentielle, le fil est métallique.

De façon avantageuse, l'actionneur est fixé à un support relié à la pièce à amortir, ledit support comprenant deux butées de guidage dudit fil.

Préférentiellement, les butées de guidages sont constituées par deux galets présentant chacun une gorge, ledit fil passant dans chacune des deux gorges. Ce type de configuration limite tout déplacement latéral dudit fil.

Avantageusement, les deux butées sont placées du même côté dudit fil, et l'actionneur, lorsqu'il est actionné, vient exercer une poussée sur le fil entre les deux butées, de façon à imprimer trois plis successifs audit fil. Le premier pli se situe autour de la première butée, le second autour du piston et le troisième autour de la deuxième butée.

Dans cette configuration, le déplacement du support le long du fil devient difficile voire impossible à cause du chemin sinueux emprunté par le fil dû à l'enfoncement du piston, ledit enfoncement générant des forces qui vont s'opposer audit déplacement.

Selon un mode de réalisation préféré de l'invention le piston se déplace selon une direction perpendiculaire à la droite fictive reliant le centre de chacune des deux butées.

De façon préférentielle, le support est initialement relié à une partie fixe du véhicule par l'intermédiaire d'une zone fragilisée.

Selon un mode de réalisation préféré de l'invention, l'actionneur est à effet de poussée variable.

Préférentiellement, l'actionneur est de type pyrotechnique et comprend un générateur de gaz pyrotechnique, une chambre de combustion et une chambre de coulissement dans laquelle le piston est apte à se déplacer sous l'effet desdits gaz.

Avantageusement, ledit actionneur comprend un dispositif d'obturation mis en oeuvre après le déclenchement dudit actionneur pour, d'une part, fermer la chambre de coulissement et, d'autre part, assurer la dépressurisation de la chambre de combustion.

En effet, l'amplitude de déplacement du piston dans la chambre de coulissement est liée au niveau de pression atteint dans ladite chambre. La fermeture de la chambre de coulissement est commandée lorsque le piston a atteint une position déterminée par l'intermédiaire de laquelle l'amortissement nécessaire pourra être obtenu. Une fois cette fermeture assurée, les gaz s'accumulent alors dans la chambre de combustion, de façon inconsidérée, avec un risque d'éclatement non négligeable. Il est donc nécessaire d'assurer la dépressurisation de la chambre de combustion le plus rapidement possible après l'obturation de la chambre de coulissement.

De façon préférentielle, le dispositif d'obturation comprend un moteur et une pièce tiroir apte à se déplacer, sous l'effet dudit moteur, dans une enceinte de coulissement munie d'un évent, ladite enceinte et la chambre de combustion étant isolées l'une de l'autre par un voile de matière.

De cette manière, l'enceinte de coulissement et la chambre de combustion ne communiquent pas entre elles, et ladite enceinte constitue un espace ouvert sur l'extérieur par l'intermédiaire de l'évent.

De façon avantageuse, la pièce tiroir est creuse et présente une extrémité coupante, de sorte que le déplacement de ladite pièce dans l'enceinte de coulissement entraîne d'abord la rupture du voile de matière, puis simultanément, l'obturation de la chambre de coulissement du piston et la mise en communication de la chambre de combustion avec l'enceinte.

De façon plus précise, l'extrémité coupante vient au contact du voile de matière puis le transperce, tandis que la partie creuse de la pièce tiroir prend la fonction d'un conduit qui assure le passage entre la chambre de combustion et l'enceinte de coulissement. L'obturation de la chambre de coulissement est réalisée par l'intermédiaire d'une partie de la paroi latérale de la pièce tiroir.

Préférentiellement, l'actionneur comporte un dispositif anti-retour empêchant le mouvement de retour du piston vers l'intérieur de la chambre de coulissement.

Lors de la fermeture de la chambre de coulissement, une partie des gaz présents dans ladite chambre peut s'échapper par l'évent, provoquant ainsi une baisse de pression dans la chambre et donc une diminution de l'effort de poussée exercé par le piston sur le fil ou même un recul dudit piston. La présence de ce dispositif anti-retour peut donc s'avérer nécessaire pour maintenir le piston dans une position fixe et ainsi éviter ces dysfonctionnements. Selon l'invention, une fois que, sous la pression des gaz s'étant accumulés dans la chambre de coulissement, le piston a atteint la position souhaitée et grâce au dispositif anti-retour, celui-ci ne peut plus reculer et reste figé en appui contre le fil.

Avantageusement, le moteur du dispositif d'obturation est un générateur de gaz pyrotechnique.

Selon un autre mode de réalisation de l'invention, le générateur de gaz de l'actionneur comprend une pluralité de charges pyrotechniques pouvant être allumées indépendamment les unes des autres de manière à fournir une quantité variable de gaz. Lesdites charges peuvent être déclenchées à partir d'un allumage séquentiel prédéterminé. Une partie seulement desdites charges peut être impliquée dans la combustion. Enfin, lesdites charges peuvent avoir des caractéristiques différentes les unes par rapport aux autres au sein d'un même générateur de gaz.

Les dispositifs d'amortissement selon l'invention présentent l'avantage d'être d'une grande précision en faisant intervenir deux générateurs de gaz pyrotechniques dont la séquence d'allumage, qui peut être programmée, est parfaitement maîtrisée, en raison notamment d'une grande fiabilité au niveau de leur allumage et du très faible temps de réaction desdits générateurs. Ils présentent également l'avantage d'être peu encombrants en raison du nombre peu élevé de pièces impliquées. Enfin, la simplicité de leur mécanisme de fonctionnement leur confère une grande fiabilité.

On donne, ci-après, la description détaillée d'un mode de réalisation préféré de l'invention en se référant aux figures 1 à 5B.

La figure 1 est une vue en perspective d'un dispositif d'amortissement selon l'invention dont l'actionneur pyrotechnique à effet de poussée variable est présenté sans sa partie supérieure.

La figure 2 est une vue en coupe axiale longitudinale d'un actionneur pyrotechnique à effet de poussée variable n'ayant pas encore fonctionné.

La figure 3 représente l'actionneur de la figure 2 mais après avoir fonctionné.

La figure 4 représente une série de trois schémas simplifiés d'un dispositif d'amortissement selon l'invention montré à différents stades de son fonctionnement.

Les figures 5A et 5B représentent deux modes de réalisation distincts d'un dispositif anti-retour adapté sur l'actionneur pour empêcher le mouvement du piston en sens inverse.

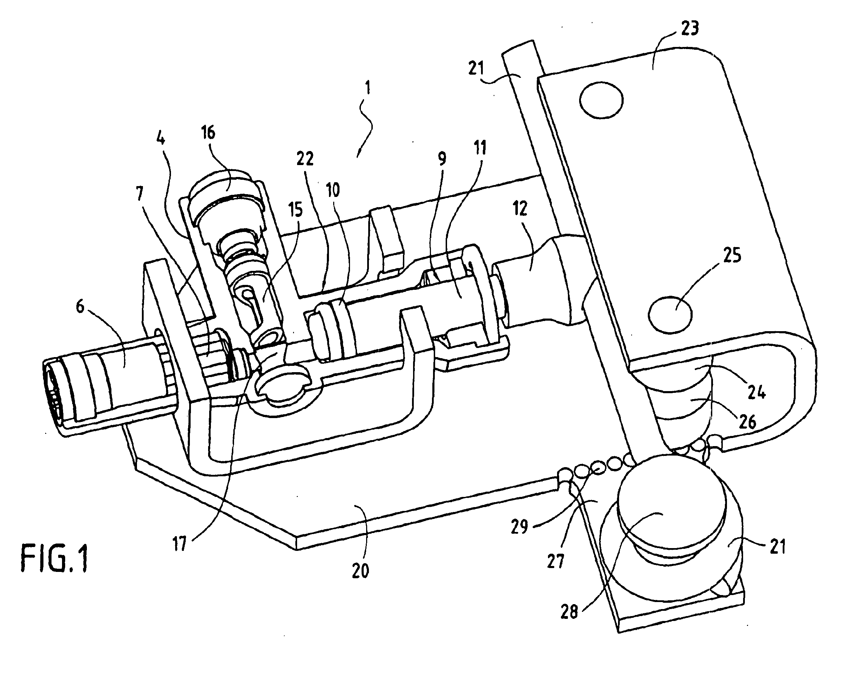

En se référant à la figure 1, un dispositif d'amortissement 1 selon l'invention fait intervenir un support 20 solidaire d'une pièce à amortir dans un véhicule automobile à la suite d'un choc, un fil métallique 21 et un actionneur pyrotechnique 22 à effet de poussée variable, ledit actionneur 22 étant fixé audit support 20.

La pièce à amortir sera par exemple constituée d'un capot d'un véhicule automobile. Dans ce cas, le dispositif d'amortissement sera placé sous le capot et permettra par exemple d'amortir le mouvement du capot lors de l'impact d'un piéton contre le capot. Dans ce cas, lorsque le véhicule automobile percute un piéton de manière frontale, le capot du véhicule se soulève d'une certaine hauteur en pivotant autour d'un axe de rotation placé vers l'avant du véhicule. En règle générale, le piéton bascule et vient percuter le capot du véhicule. Le système d'absorption selon l'invention placé sous le capot permet d'amortir le mouvement du capot créé par l'impact du piéton contre ledit capot.

La pièce à amortir pourra également être constituée d'un bouclier d'un véhicule automobile. Le dispositif selon l'invention pourra être placé par exemple entre le bouclier d'un véhicule automobile et la structure porteuse du bouclier pour amortir le mouvement du bouclier en cas de choc frontal du véhicule. Lors de l'accident, le bouclier avance grâce à un dispositif spécifique, par exemple muni d'actionneurs pyrotechniques, et est ensuite amorti par le système d'absorption selon l'invention. Ceci permettra notamment, lorsque le choc se produit à basse vitesse, d'éviter la déformation du châssis du véhicule et ainsi de réduire les coûts de remise en état du véhicule après l'accident.

La pièce à amortir pourra également être constituée par exemple d'une colonne de direction. Il s'agira dans ce cas d'amortir le déplacement de la colonne engendré par le choc du conducteur contre ladite colonne.

La pièce à amortir pourra également par exemple être constitué d'une ceinture de sécurité. Il s'agira dans ce cas de freiner et de stopper la ceinture de sécurité pour éviter à l'occupant du véhicule d'être retenu de manière trop brutale par sa ceinture de sécurité lors d'un accident.

Selon l'invention, le support 20 présente une partie repliée 23 dans laquelle sont fixés deux galets 24 par l'intermédiaire d'un axe de fixation 25, l'un des deux galets 24 n'étant pas visible sur la figure 1. Les deux galets 24 sont placés sur le même plan et comportent chacun une gorge 26 dans laquelle passe le fil métallique 21. L'une des deux extrémités du fil 21 est reliée par exemple à une partie fixe 27 du véhicule en étant enroulée autour d'un ergot 28 de ladite partie fixe 27, l'autre extrémité dudit fil 21 étant libre. Selon l'invention, l'inverse peut tout à fait être envisagé et la disposition du dispositif selon l'invention dépendra des applications dans lesquelles il est utilisé. Le support 20 est relié à ladite partie fixe 27 du véhicule éventuellement, selon les applications envisagées, par l'intermédiaire d'une zone fragilisée 29 apte à se découper facilement en cas de choc du véhicule.

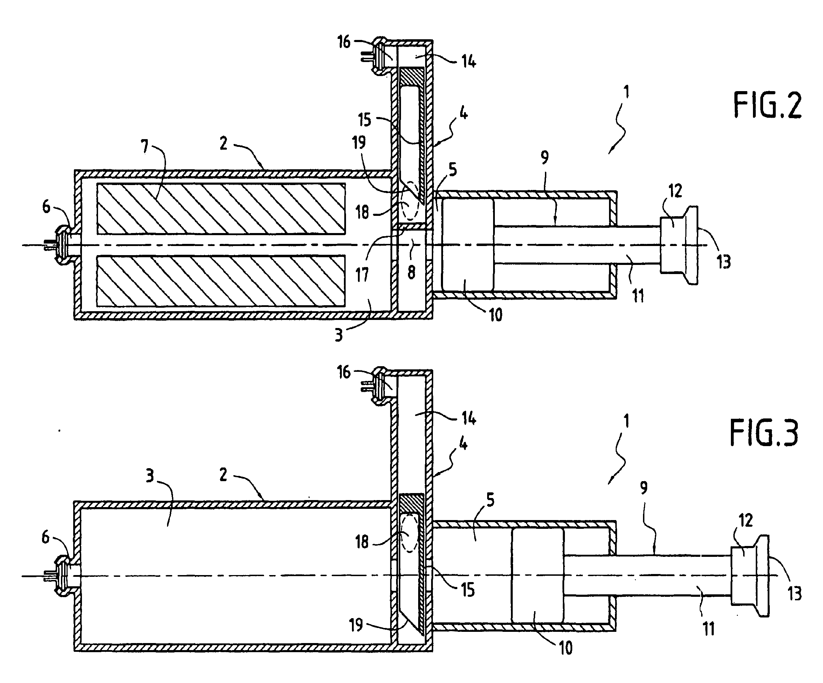

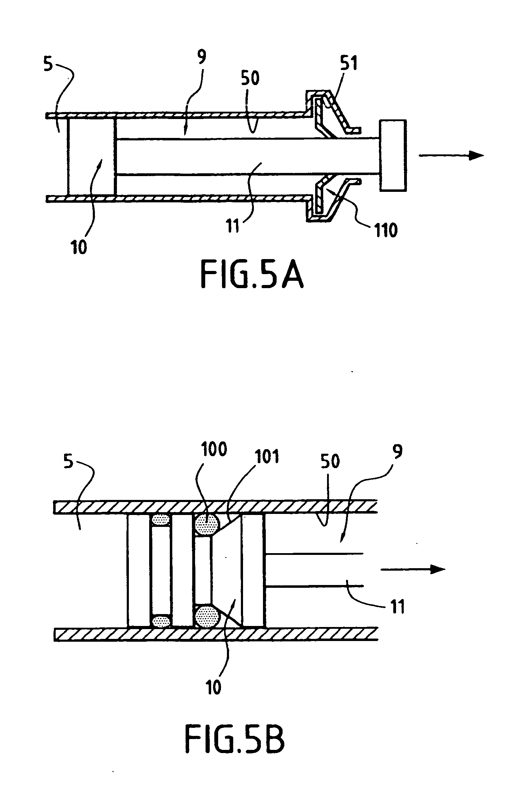

En se référant à la figure 2, l'actionneur pyrotechnique 22 est constitué d'un corps creux 2 délimitant trois parties distinctes en continuité les unes des autres : une chambre de combustion 3 prolongée par un dispositif d'obturation 4, lui-même prolongé par une chambre de coulissement 5. La chambre de combustion 3, qui est cylindrique, possède à l'une de ses extrémités un système d'allumage 6 électropyrotechnique, et loge un générateur de gaz pyrotechnique 7. L'autre extrémité de ladite chambre 3 possède une ouverture débouchant, par l'intermédiaire d'un passage 8, sur la chambre de coulissement 5 qui a aussi une forme cylindrique et dans laquelle est logé un piston 9 comportant un corps cylindrique 10 prolongé par une tige centrale 11 de plus faible diamètre. Le corps 10 du piston 9 a un diamètre sensiblement inférieur à celui du diamètre de la paroi interne de la chambre de coulissement 5, de sorte que ledit piston 9 peut coulisser de façon étanche dans ladite chambre 5. Préférentiellement, l'actionneur comporte un dispositif anti-retour au mouvement du piston 9 vers l'intérieur de la chambre de coulissement. Selon l'invention, une fois que, sous la pression des gaz présents dans la chambre de coulissement 5, le piston 9 a atteint une position déterminée, grâce au dispositif anti-retour, il ne peut plus coulisser en sens inverse, c'est-à-dire vers l'intérieur de la chambre de coulissement 5. En référence à la figure 5B, ce dispositif anti-retour pourra être constitué par exemple de billes 100 logées dans une partie du piston 9. Lors d'un retour du piston 9 vers l'intérieur de la chambre de coulissement, les billes 100 suivent un profil tronconique 101 formé sur la paroi latérale du piston 9 et viennent ainsi en contact avec la paroi interne 50 du cylindre délimitant la chambre de coulissement 5 du piston 9. Les billes 100 permettent ainsi de stopper le piston 9 dans la position déterminée par la pression des gaz présents dans la chambre de coulissement 5. Selon une variante de réalisation représentée en figure 5A, le dispositif anti-retour, est constitué d'une rondelle 110 crantée enfilée autour de la tige 11 du piston 9, et logée dans une gorge 51 annulaire formée sur la paroi interne 50 du cylindre délimitant la chambre de coulissement 5 du piston 9. La rondelle 110 a une forme convergente suivant le sens de poussée du piston 9. Le diamètre de l'orifice central de la rondelle est déterminé de manière à ce que la rondelle 110 soit en contact avec la tige 11 du piston 9. Lorsque le piston se déplace dans le sens de la flèche sur la figure 5A pour exercer une poussée, la tige 11 coulisse par rapport à la rondelle 110 et s'extrait ainsi de l'actionneur. Lors d'un mouvement en sens inverse, la rondelle 110 maintenue dans la gorge 51 est sollicité vers l'intérieur et grâce à sa convergence bloque le retour du piston 9 vers l'intérieur de la chambre de coulissement 5.

La chambre de coulissement 5 présente à l'une de ses extrémités une ouverture, de laquelle émerge l'extrémité libre de la tige centrale 11 du piston 9, ladite extrémité libre étant recouverte par un bouchon 12 présentant deux bords parallèles relevés. L'axe de révolution de la chambre de combustion 3 est confondu avec l'axe de révolution de la chambre de coulissement 5. Le passage 8 reliant la chambre de combustion 3 à la chambre de coulissement 5 est partiellement délimité par un dispositif d'obturation 4 ayant la forme d'un cylindre creux dans lequel est logée une pièce tiroir 15.

Le dispositif d'obturation 4 présente un coude permettant de définir deux parties rectilignes et perpendiculaires entre elles. La première partie comporte à son extrémité libre un système d'allumage électropyrotechnique secondaire 16 et la deuxième partie qui comprend ladite pièce tiroir 15 définit une enceinte de coulissement 14 pour ladite pièce tiroir 15. Ladite enceinte 14 est séparée du passage 8 par l'intermédiaire d'un voile de matière 17 et possède un évent 18 débouchant sur l'extérieur dudit actionneur 1. Ladite enceinte 14 définit donc un espace ouvert séparée à la fois de la chambre de combustion 3 et de la chambre de coulissement 5 du piston 9. La pièce tiroir 15 est constituée par une pièce cylindrique creuse présentant une ouverture sur la paroi latérale et comportant une extrémité ouverte, coupante et biseautée 19. La pièce tiroir 15 est placée dans l'enceinte de coulissement 14 de façon à ce que son extrémité coupante soit située en regard du voile de matière 17. L'axe de l'enceinte de coulissement est perpendiculaire à l'axe de la chambre de combustion 3 et à celui de la chambre de coulissement 5.

Au repos, comme le montre la figure 1, le bouchon 12 situé à l'extrémité libre de la tige 11 du piston 9 est au contact du fil 21 entre les deux galets 24, ledit fil 21 passant entre les deux bords relevés dudit bouchon 12.

Le mode de fonctionnement d'un dispositif d'amortissement selon l'invention suit les étapes suivantes.

Dans un premier temps, suite à un choc du véhicule, le dispositif d'amortissement subit une phase d'armement prédéterminée. Durant cette phase, l'actionneur pyrotechnique 22 est déclenché. Autrement dit, le générateur de gaz 7 est initié en combustion libérant des gaz qui envahissent la chambre de coulissement 5 et provoquent le déplacement du piston 9. A un instant donné, qui peut être prédéterminé, le dispositif d'obturation 4 est à son tour allumé.

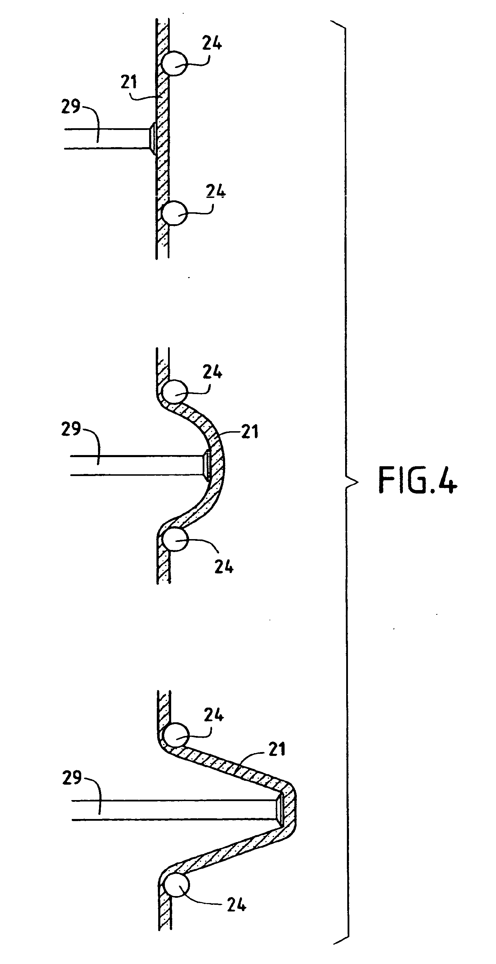

La pièce tiroir 15 est alors déplacée dans l'enceinte de coulissement 14 provoquant la fermeture de la chambre de coulissement 5 tout en permettant aux gaz de la chambre de combustion 3 de s'échapper par l'intermédiaire de l'évent 18, ladite pièce 15 ayant préalablement perforé le voile de matière 17. De cette manière, le piston 9 s'est déplacé d'une longueur prédéterminée. Grâce au dispositif anti-retour, le piston est maintenu dans cette position. Puisque ledit piston 9 est initialement au contact du fil 21, il exerce alors une poussée sur ledit fil 21 en lui faisant subir trois plis successifs comme le montre le troisième schéma de la figure 4. Cette configuration matérialise la fin de la phase d'armement.

Dans un deuxième temps, une fois que le dispositif d'amortissement est armé, le choc provoque la rupture de la zone fragilisée 29, permettant au support 20 et donc à la pièce, de se déplacer par rapport à la partie fixe 27 du véhicule, le long du fil 21. Le chemin sinueux emprunté par ledit fil 21 dû à l'enfoncement du piston 9 entre les deux galets 24, génère au cours du déplacement du support 20, des forces qui vont s'opposer audit déplacement le long du fil 21. Par conséquent, ledit support 20 et donc la pièce à amortir sont immédiatement freinés puis stoppés.

Selon l'invention, un tel dispositif d'amortissement peut être adapté pour amortir un bouclier avant d'un véhicule automobile lors d'un choc frontal dudit véhicule.

De même, le dispositif d'amortissement pourra être adapté pour amortir le mouvement d'un capot d'un véhicule automobile engendré par l'impact d'un piéton contre le dit capot. Dans ce cas, le support 20 est solidaire du capot et le fil 21 est fixé à une partie fixe 27 du véhicule. Lorsqu'un véhicule percute un piéton par l'avant, le capot se soulève en pivotant autour d'un axe situé à proximité de l'avant du véhicule. L'impact du piéton contre le capot doit être amorti pour éviter que le capot ne constitue une butée fixe pouvant causer des blessures graves au piéton. L'amortissement du capot est nécessaire et peut être obtenu à l'aide d'un dispositif conforme à celui de l'invention. Une fois la phase d'armement du dispositif effectuée, l'impact du piéton contre le capot provoque la rupture de la zone fragilisée 29 ce qui permet au support 20 et donc au capot, de se déplacer par rapport à la partie fixe 27 du véhicule, le long du fil 21. Le chemin sinueux emprunté par ledit fil 21 dû à l'enfoncement du piston 9 entre les deux galets 24, génère au cours du déplacement du support 20, des forces qui vont s'opposer audit déplacement le long du fil 21. Par conséquent, ledit support 20 et donc le capot sont immédiatement freinés puis stoppés.

Le dispositif selon l'invention peut également être adapté pour freiner puis stopper le mouvement d'une colonne de direction d'un véhicule automobile, engendré par le choc du conducteur contre le volant. Dans ce cas, le support 20 est solidaire de la colonne de direction et une extrémité du fil 21 est fixée à une partie fixe 27 du véhicule. Une fois le dispositif d'amortissement armé, le choc provoque la rupture de la zone fragilisée 29, permettant ainsi au support solidaire de la colonne de coulisser le long du fil 21. L'amortissement est ensuite réalisé le long du fil 21 en fonction de l'enfoncement du piston 9 contre le fil 21 entre les deux galets 24.

## Revendications

1. Dispositif d'amortissement (1) du déplacement d'au moins une pièce mise en mouvement lors d'un choc mécanique d'un véhicule automobile avec un élément extérieur, comprenant un actionneur pyrotechnique (22) apte à déplacer un piston (9), et un fil (21) dont une extrémité est reliée à une partie fixe (27) du véhicule, ledit actionneur (22), qui est solidaire de ladite pièce à amortir, coopérant avec ledit fil (21) pour freiner puis stopper la pièce, **caractérisé en ce que** l'actionneur (22) est fixé à un support (20) relié à la pièce à amortir, ledit support (20) comprenant deux butées (24) de guidage dudit fil (21).

2. Dispositif d'amortissement selon la revendication 1 **caractérisé en ce que** le fil (21) possède une extrémité libre et présente une aptitude à la déformation.

3. Dispositif d'amortissement selon la revendication 1 ou 2 **caractérisé en ce que** le fil (21) est métallique.

4. Dispositif d'amortissement selon l'une quelconque des revendications 1 ou 3 **caractérisé en ce que** les butées de guidage sont constituées par deux galets (24) présentant chacun une gorge (26), ledit fil (21) passant dans chacune des deux gorges (26).

5. Dispositif d'amortissement selon l'une quelconque des revendications 1 à 4 **caractérisé en ce que** les deux butées (24) sont placées du même côté dudit fil (21), et **en ce que** le piston (9) de l'actionneur, lorsqu'il est actionné, vient exercer une poussée sur le fil (21) entre les deux butées (20), de façon à imprimer trois plis successifs audit fil (21).

6. Dispositif d'amortissement selon l'une quelconque des revendications 1 à 5 **caractérisé en ce que** le piston (9) se déplace selon une direction perpendiculaire à la droite fictive reliant le centre de chacune des deux butées (24).

7. Dispositif d'amortissement selon l'une quelconque des revendications 1 à 6 **caractérisé en ce que** le support (20) est initialement relié à une partie fixe (27) du véhicule par l'intermédiaire d'une zone fragilisée (29).

8. Dispositif d'amortissement selon l'une quelconque des revendications 1 à 7 **caractérisé en ce que** l'actionneur (22) est à effet de poussée variable.

9. Dispositif d'amortissement selon l'une quelconque des revendications 1 à 8 **caractérisé en ce que** l'actionneur (22) est de type pyrotechnique et comprend un générateur de gaz pyrotechnique (7), une chambre de combustion (3) et une chambre de coulissement (5) dans laquelle le piston (9) est apte à se déplacer sous l'effet desdits gaz.

10. Dispositif d'amortissement selon la revendication 9 **caractérisé en ce que** ledit actionneur (22) comprend un dispositif d'obturation (4) mis en oeuvre après le déclenchement dudit actionneur (22) pour, d'une part, fermer la chambre de coulissement (5) et, d'autre part, assurer la dépressurisation de la chambre de combustion (3).

11. Dispositif d'amortissement selon la revendication 10 c**aractérisé en ce que** le dispositif d'obturation (4) comprend un moteur (16) et une pièce tiroir (15) apte à se déplacer, sous l'effet dudit moteur (16), dans une enceinte de coulissement (14) munie d'un évent (18), l'enceinte de coulissement (14) et la chambre de combustion (3) étant isolées l'une de l'autre par un voile de matière (17).

12. Dispositif d'amortissement selon la revendication 11 **caractérisé en ce que** la pièce tiroir (15) est creuse et présente une extrémité coupante (19), de sorte que le déplacement de ladite pièce (15) dans l'enceinte de coulissement (14) entraîne d'abord la rupture du voile de matière (17), puis simultanément, l'obturation de la chambre de coulissement (5) du piston (9) et la mise en communication de la chambre de combustion (3) avec l'enceinte de coulissement (14).

13. Dispositif d'amortissement selon l'une quelconque des revendications 9 à 12, **caractérisé en ce que** l'actionneur (22) comporte un dispositif anti-retour empêchant le retour du piston (9) vers l'intérieur de la chambre de coulissement (5).

14. Dispositif d'amortissement selon l'une quelconque des revendications 11 à 13 **caractérisé en ce que** le moteur (16) du dispositif d'obturation (4) est un générateur de gaz pyrotechnique.

15. Dispositif d'amortissement selon l'une quelconque des revendications 9 à 14 **caractérisé en ce que** le générateur de gaz (7) de l'actionneur (22) comprend une pluralité de charges pyrotechniques pouvant être allumées indépendamment les unes des autres, de manière à fournir une quantité variable de gaz.

16. Utilisation d'un dispositif d'amortissement selon l'une quelconque des revendications 1 à 15 pour amortir un bouclier d'un véhicule automobile en cas de choc frontal du véhicule.

17. Utilisation d'un dispositif d'amortissement selon l'une quelconque des revendications 1 à 15, pour protéger les membres inférieurs d'un occupant d'un véhicule automobile.

18. Utilisation d'un dispositif d'amortissement selon l'une quelconque des revendications 1 à 15, pour amortir l'impact d'un piéton contre le capot d'un véhicule automobile.

19. Utilisation d'un dispositif d'amortissement selon l'une quelconque des revendications 1 à 15, pour amortir une colonne de direction d'un véhicule automobile.

## Claims

1. Damping device (1) for damping the displacement of at least one part set in motion during a mechanical collision between a motor vehicle and an external object, comprising a pyrotechnic actuator (22) that is able to displace a piston (9), and a wire (21) having one end connected to a fixed portion (27) of the vehicle, the said actuator (22), which is secured to the said part to be damped, interacting with the said wire (21) in order to retard and then stop the part, **characterized in that** the actuator (22) is fastened to a support (20) connected to the part to be damped, the said support (20) comprising two stops (24) for guiding the said wire (21).

2. Damping device according to claim 1, **characterized in that** the wire (21) has one free end and possesses the ability to be deformed.

3. Damping device according to claim 1 or 2, **characterized in that** the wire (21) is made of metal.

4. Damping device according to any one of claims 1 to 3, **characterized in that** the guide stops consist of two rollers (24) each having a groove (26), the said wire (21) passing within each of the two grooves (26).

5. Damping device according to any one of claims 1 to 4, **characterized in that** the two stops (24) are placed on the same side of the said wire (21), and **in that**, when actuated, the piston (9) of the actuator exerts a thrust on the wire (21) between the two stops (24) so as to imprint three successive folds on the said wire (21).

6. Damping device according to any one of claims 1 to 5, **characterized in that** the piston (9) is displaced in a direction perpendicular to the imaginary straight line connecting the centres of each of the two stops (24).

7. Damping device according to any one of claims 1 to 6, **characterized in that** the support (20) is initially connected to a fixed portion (27) of the vehicle via a weakened zone (25).

8. Damping device according to any one of claims 1 to 7, **characterized in that** the actuator (22) is an actuator with a variable thrust action.

9. Damping device according to any one of claims 1 to 8, **characterized in that** the actuator (22) is of the pyrotechnic type and comprises a pyrotechnic gas generator (7), a combustion chamber (3) and a sliding chamber (5) in which the piston (9) is able to be displaced under the effect of the said gas.

10. Damping device according to claim 9, **characterized in that** the said actuator (22) comprises a blocking device (4) employed after the said actuator (22) has been triggered in order, on the one hand, to close the sliding chamber (5) and, on the other hand, to depressurize the combustion chamber (3).

11. Damping device according to claim 10, **characterized in that** the blocking device (4) comprises a motor (16) and a slide part (15) that is able to be displaced, under the effect of the said motor (16), in a sliding enclosure (14) provided with a vent (18), the sliding enclosure (14) and the combustion chamber (3) being isolated from one another by a screen of material (17).

12. Damping device according to claim 11, **characterized in that** the slide part (15) is hollow and has a cutting end (19), with the result that the displacement of the said part (15) in the sliding enclosure (14) first leads to the screen of material (17) being ruptured and then, simultaneously, to the sliding chamber (5) for the piston (9) being blocked off and the combustion chamber (3) being placed in communication with the sliding enclosure (14).

13. Damping device according to any one of claims 9 to 12, **characterized in that** the actuator comprises a non-return device preventing the return of the piston (9) towards the inside of the sliding chamber (5).

14. Damping device according to any one of claims 11 to 13, **characterized in that** the motor (16) of the blocking device (4) is a pyrotechnic gas generator.

15. Damping device according to any one of claims 9 to 14, **characterized in that** the gas generator (7) of the actuator (22) comprises a plurality of pyrotechnic charges which can be ignited independently of one another in such a way as to supply a variable quantity of gas.

16. Use of a damping device according to any one of claims 1 to 15 for damping a bumper of a motor vehicle in the event of a head-on collision of the vehicle.

17. Use of a damping device according to any one of claims 1 to 15 for protecting the lower limbs of an occupant of a motor vehicle.

18. Use of a damping device according to any one of claims 1 to 15 for damping the impact of a pedestrian against the bonnet of a motor vehicle.

19. Use of a damping device according to any one of claims 1 to 15 for damping a steering column of a motor vehicle.

## Patentansprüche

1. Stossabsorbierende Vorrichtung (1) mindestens eines Bauteils, das bei einem mechanischen Zusammenstoß eines Kraftfahrzeugs mit einem äußeren Hindernis in Bewegung gesetzt wird, eine pyrotechnische Auslösevorrichtung (22) umfassend, welche dazu geeignet ist, einen Druckkolben (9) zu bewegen und einen Faden (21), der an einem Ende mit einem unbeweglichen Teil des Fahrzeugs (27) verbunden ist, wobei die Auslösevorrichtung (22), die fest verbunden ist mit dem zu dämpfenden Bauteil, mit dem Faden (21) zusammenwirkt, um das Bauteil abzubremsen und dann zu stoppen, **dadurch gekennzeichnet, dass** die Auslösevorrichtung (22) an einem Träger (20) befestigt ist, der mit dem zu dämpfenden Bauteil verbunden ist, wobei der Träger (20) zwei den Faden (21) führende Anschlagvorrichtungen (24) umfasst.

2. Stossabsorbierende Vorrichtung nach Anspruch 1, **dadurch gekennzeichnet, dass** der Faden (21) ein freies Ende besitzt und zur Verformung geeignet ist.

3. Stossabsorbierende Vorrichtung nach Anspruch 1 oder 2, **dadurch gekennzeichnet, dass** der Faden (21) metallisch ist.

4. Stossabsorbierende Vorrichtung nach einem beliebigen Anspruch der Ansprüche 1 bis 3, **dadurch gekennzeichnet, dass** die Anschlagvorrichtungen aus zwei Umlenkrollen (24) gebildet sind, die jeweils eine Rille (26) aufweisen, wobei der Faden (21) in jeder der beiden Rillen (26) verläuft.

5. Stossabsorbierende Vorrichtung nach einem beliebigen Anspruch der Ansprüche 1 bis 4, **dadurch gekennzeichnet, dass** die beiden Anschlagvorrichtungen (24) auf derselben Seite des Fadens (21) angeordnet sind und dass der Druckkolben (9) der Auslösevorrichtung, wenn er ausgelöst wird, zwischen den beiden Anschlagvorrichtungen (20) auf den Faden (21) eine Stosskraft ausübt, so dass der Faden (21) drei aufeinanderfolgende Umlenkungen erfährt.

6. Stossabsorbierende Vorrichtung nach einem beliebigen Anspruch der Ansprüche 1 bis 5, **dadurch gekennzeichnet, dass** sich der Druckkolben (9) im rechten Winkel zu einer fiktiven Geraden bewegt, die die Mittelpunkte der beiden Anschlagvorrichtungen verbindet.

7. Stossabsorbierende Vorrichtung nach einem beliebigen Anspruch der Ansprüche 1 bis 6, **dadurch gekennzeichnet, dass** der Träger (20) anfänglich durch eine Sollbruchstelle (29) mit einem unbeweglichen Teil (27) des Fahrzeugs verbunden ist.

8. Stossabsorbierende Vorrichtung nach einem beliebigen Anspruch der Ansprüche 1 bis 7, **dadurch gekennzeichnet, dass** die Auslösevorrichtung (22) eine variable Stosswirkung hat.

9. Stossabsorbierende Vorrichtung nach einem beliebigen Anspruch der Ansprüche 1 bis 8, **dadurch gekennzeichnet, dass** die Auslösevorrichtung (22) pyrotechnischen Typs ist und einen pyrotechnischen Gasgenerator (7) umfasst, eine Verbrennungskammer (3) und eine Gleitkammer (5) in der der Druckkolben (9) sich unter der Wirkung des Gases bewegen kann.

10. Stossabsorbierende Vorrichtung nach Anspruch 9, **dadurch gekennzeichnet, dass** die Auslösevorrichtung (22) eine Verschlussvorrichtung (4) umfasst, die nach dem Auslösen der Auslösevorrichtung (22) eingesetzt wird um zum einen die Gleitkammer (5) zu verschliessen und zum anderen den Druckabfall in der Verbrennungskammer (3) sicherzustellen.

11. Stossabsorbierende Vorrichtung nach Anspruch 10, **dadurch gekennzeichnet, dass** die Verschlussvorrichtung (4) einen Motor (16) umfasst und einen Schieber (15), der sich unter der Wirkung des Motors in einem Gleitbehälter (14), der mit einem Entlüftungsloch (18) versehen ist, verschieben kann, wobei der Gleitbehälter (14) und die Verbrennungskammer (3) durch eine Trennwand (17) voneinander abgetrennt sind.

12. Stossabsorbierende Vorrichtung nach Anspruch 11, **dadurch gekennzeichnet, dass** der Schieber (15) hohl ist und ein schneidendes Endstück (19) aufweist, so dass die Bewegung diese Bauteils (15) in dem Gleitbehälter (14) zunächst den Bruch der Trennwand (17) zur Folge hat und dann zugleich den Verschluss der Gleitkammer (5) des Druckkolbens (9) und das Entstehen einer Verbindung der Verbrennungskammer (3) mit dem Gleitbehälter (14).

13. Stossabsorbierende Vorrichtung nach einem beliebigen Anspruch der Ansprüche 9 bis 12, **dadurch gekennzeichnet, dass** die Auslösevorrichtung (22) eine Vorrichtung zur Rückschlagverhinderung umfasst, die den Rückschlag des Druckkolbens (9) in das Innere der Gleitkammer (5) verhindert.

14. Stossabsorbierende Vorrichtung nach einem beliebigen Anspruch der Ansprüche 11 bis 13, **dadurch gekennzeichnet, dass** der Motor (16) der Verschlussvorrichtung (4) ein pyrotechnischer Gasgenerator ist.

15. Stossabsorbierende Vorrichtung nach einem beliebigen Anspruch der Ansprüche 9 bis 14, **dadurch gekennzeichnet, dass** der Gasgenerator (7) der Auslösevorrichtung (22) eine Vielzahl von pyrotechnischen Ladungen umfasst, die unabhängig voneinander gezündet werden können, so dass eine variable Gasmenge bereitgestellt wird.

16. Verwendung einer stossabsorbierenden Vorrichtung nach einem beliebigen Anspruch der Ansprüche 1 bis 15, um eine Frontverkleidung eines Kraftfahrzeugs zu dämpfen im Falle eines frontalen Zusammenstosses des Fahrzeugs.

17. Verwendung einer stossabsorbierenden Vorrichtung nach einem beliebigen Anspruch der Ansprüche 1 bis 15, um die unteren Gliedmaßen eines Kraftfahrzeuginsassen zu schützen.

18. Verwendung einer stossabsorbierenden Vorrichtung nach einem beliebigen Anspruch der Ansprüche 1 bis 15, um den Aufprall eines Fussgängers gegen die Fronthaube eines Kraftfahrzeugs zu dämpfen.

19. Verwendung einer stossabsorbierenden Vorrichtung nach einem beliebigen Anspruch der Ansprüche 1 bis 15, um eine Lenksäule eines Kraftfahrzeugs zu dämpfen.
